# DEMANDE DE BREVET EUROPEEN

(11) **EP 1 331 148 A1**
(43) Date de publication de la demande: **30.07.2003**
(21) Numéro de dépôt: 03356006.1
(22) Date de dépôt: 22.01.2003
(51) Int. Cl.: B60R 25/02, B62D 5/06

(54) **Dispositif antivol pour véhicule automobile à direction assistée hydraulique**

(30) Priorité: 23.01.2002 FR 0200823
(71) Demandeur: Société de Mécanique d'Irigny, 69540 Irigny (FR)
(72) Inventeur: Pantale, David, 69126 Brindas (FR)
(74) Mandataire: Bratel, Gérard

(57) **Abrégé**

Le dispositif antivol comprend une vanne hydraulique commandée (16), notamment une électrovanne, placée sur l'un des conduits hydrauliques (11, 12) d'alimentation du vérin d'assistance (2, 13, 14, 15). La vanne hydraulique (16) est conçue et/ou commandée de façon à interdire la circulation du fluide hydraulique dans le conduit (12), lorsque l'utilisation du véhicule doit être empêchée. Ce dispositif s'applique aux véhicules automobiles à direction assistée hydraulique.

## Description

La présente invention concerne, de façon générale, les véhicules automobiles équipés d'une direction assistée hydraulique. Cette invention se rapporte, plus particulièrement, à un dispositif antivol adapté à un véhicule automobile pourvu d'une telle direction assistée.

La fonction "antivol" est traditionnellement réalisée, sur la plupart des véhicules automobiles, par un dispositif qui, lorsque le véhicule n'est pas utilisé, assure mécaniquement le blocage en rotation de la colonne de direction, ou le blocage de tout autre élément mécanique mobile du système de direction, ceci indépendamment de tout système d'assistance de la direction dont serait équipé le véhicule.

Un tel dispositif antivol conserve un certain nombre d'inconvénients :
- Dans sa réalisation classique, sous la forme d'un pêne agissant sur la partie haute de la colonne de direction, le dispositif antivol nécessite diverses pièces mécaniques, entraînant une certaine complexité de construction, et rendant le dispositif relativement encombrant.
- En raison de sa position, le dispositif antivol reste assez facilement accessible, de sorte qu'il risque d'être "forcé" et ne procure donc pas une sécurité suffisante, le "forçage" du dispositif entraînant de plus sa détérioration.
- Dans la mesure où il agit directement sur la colonne de direction, en la bloquant seulement dans certaines positions angulaires, le dispositif antivol exige aussi des efforts manuels de la part de l'automobiliste, pour amener la colonne de direction dans une position angulaire adéquate, permettant le blocage (alors qu'aucune assistance n'est disponible).

La présente invention vise à éviter tous ces inconvénients de la solution actuelle, en fournissant un dispositif antivol plus simple, plus compact et mieux sécurisé, adapté à tous les véhicules pourvus d'une direction assistée hydraulique, donc à la plupart des véhicules automobiles actuels.

A cet effet, l'invention a essentiellement pour objet un dispositif antivol pour véhicule automobile à direction assistée hydraulique, cette direction comprenant de façon connue en soi un vérin d'assistance à double effet alimenté en fluide hydraulique par des conduits hydrauliques partant d'une valve d'assistance, le dispositif antivol étant caractérisé par le fait qu'il comprend au moins une vanne hydraulique commandée, placée sur l'un au moins des conduits hydrauliques d'alimentation du vérin d'assistance, la ou chaque vanne hydraulique étant conçue et/ou commandée de façon à interdire la circulation du fluide hydraulique dans le conduit correspondant, lorsque l'utilisation du véhicule doit être empêchée.

Avantageusement, cette vanne hydraulique, placée sur un conduit hydraulique d'alimentation du vérin d'assistance, est une électrovanne pilotée à partir d'un calculateur électronique de véhicule concerné, gérant les phases de mise sous contact et de démarrage de ce véhicule. Cette électrovanne peut être du type "fermée au repos", c'est-à-dire fermée lorsqu'elle n'est pas alimentée électriquement, ceci évitant qu'une personne mal intentionnée ne tente de l'ouvrir par le simple fait de débrancher la batterie du véhicule ou un fil électrique de ce véhicule. Il peut aussi s'agit d'une électrovanne bistable, nécessitant seulement une impulsion électrique pour sa fermeture et son ouverture, ce qui évite son alimentation électrique permanente, consommatrice d'énergie, pour son maintien dans un état donné (par exemple : ouvert).

Ainsi, l'idée inventive consiste ici à freiner le déplacement du fluide hydraulique dans la direction assistée du véhicule concerné, en bloquant la circulation de ce fluide au moyen d'une valve hydraulique placée sur l'un des conduits d'alimentation du vérin hydraulique d'assistance, ou sur les deux conduits d'alimentation de ce vérin, ce qui entraîne en pratique un blocage de la direction, rendant le véhicule inutilisable (que la pompe hydraulique d'assistance fonctionne, ou non).

Dans l'ensemble, le dispositif antivol objet de l'invention possède les avantages suivants :
- Ce dispositif est particulièrement simple, et il procure en particulier une réduction du nombre de pièces mécaniques mobiles.
- Le dispositif antivol n'est plus accessible et, se confondant avec le circuit hydraulique d'assistance de la direction, il devient pratiquement indécelable, ce qui contribue à son efficacité.
- En prévoyant deux vannes hydrauliques, placées respectivement sur les deux conduits hydrauliques d'alimentation du vérin d'assistance, le dispositif antivol est rendu "redondant" donc encore plus fiable (la défaillance éventuelle de l'une des vannes n'annulant pas l'action du dispositif).
- Etant intégré au circuit hydraulique d'assistance, le dispositif antivol ne nécessite pratiquement aucune place spéciale pour son installation, et en particulier il ne vient plus encombrer la partie haute de la colonne de direction.
- Le dispositif antivol peut intervenir instantanément et efficacement pour toute position angulaire du volant et de la colonne de direction, donc sans qu'il soit nécessaire d'exercer un effort manuel sur le volant pour amener au préalable la direction dans une position angulaire particulière.
- Dans la mesure où la plupart des véhicules automobiles sont désormais pourvus d'un calculateur électronique, le pilotage de la vanne (ou des vannes) du dispositif devient aisé, ce qui contribue encore à la simplicité de l'ensemble. A cet égard, on notera que l'information à fournir par le calculateur pour piloter la vanne hydraulique est de même type que pour la commande des systèmes d'antivol actuels avec un pêne actionné électriquement, de sorte que la réalisation de cette fonction ne posera pas de difficulté particulière.

Au sujet du fonctionnement du dispositif objet de l'invention, on notera encore que, une fuite "naturelle" de fluide hydraulique se faisant au niveau du joint d'étanchéité du piston séparant les deux chambres du vérin d'assistance, on crée ainsi un couple résistant de valeur élevée rendant la conduite du véhicule impossible, l'effort manuel requis pour tourner le volant devenant trop élevé, tout en autorisant une rotation résiduelle du volant et de la colonne de direction, ce qui évitera toute rupture d'une pièce mécanique en cas de surcouple exercé lors d'une tentative d'effraction sur le véhicule. Il apparaît ainsi un avantage supplémentaire de ce dispositif antivol, qui est d'éviter toute détérioration des éléments de direction pour le cas où le dispositif serait "forcé", contrairement aux antivols mécaniques actuels.

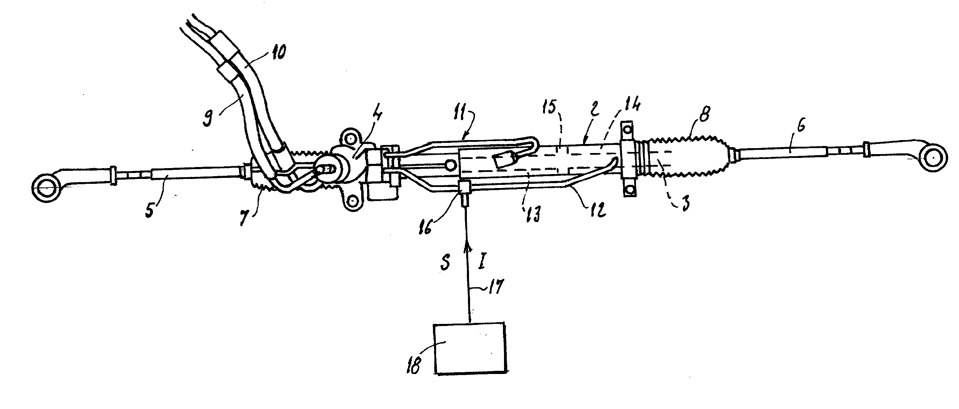

De toute façon, l'invention sera mieux comprise à l'aide de la description qui suit, en référence au dessin schématique annexé représentant, à titre d'exemple, une forme d'exécution de ce dispositif antivol pour véhicule automobile à direction assistée hydraulique.

L'unique figure du dessin annexé représente, en vue extérieure, une direction assistée hydraulique équipée d'un dispositif antivol conforme à la présente invention.

Sur cette figure, le repère 2 désigne le carter central tubulaire d'une direction assistée hydraulique, dans lequel est montée coulissante une crémaillère 3, en prise avec un pignon rotatif (non représenté), lié en rotation à la colonne de direction par l'intermédiaire d'une valve d'assistance 4. Les extrémités droite et gauche de la crémaillère 3, extérieures au carter 2, sont accouplées à des biellettes 5 et 6, qui commandent l'orientation des roues directrices droite et gauche du véhicule. Deux soufflets 7 et 8, raccordés respectivement aux deux extrémités du carter 2, recouvrent et protègent les zones d'extrémité de la crémaillère 3, ainsi que partiellement les biellettes 5 et 6.

En ce qui concerne le système hydraulique d'assistance, une première canalisation 9 alimente la valve d'assistance 4 en fluide hydraulique, depuis un réservoir avec pompe (non représenté), et une autre canalisation 10, partant de cette valve 4, assure le retour du fluide hydraulique vers le réservoir.

Deux conduits hydrauliques 11 et 12 relient la valve d'assistance 4 à la partie "vérin" du carter tubulaire 2. Plus particulièrement, les deux conduits 11 et 12 alimentent en fluide hydraulique deux chambres de vérin respectives 13 et 14, séparées l'une de l'autre par un piston 15 solidaire de la crémaillère 3. La valve d'assistance 4 envoie sélectivement le fluide hydraulique, par le conduit 11 ou 12, vers la chambre 13 ou 14, selon que le conducteur du véhicule commande par le volant un braquage à droite ou un braquage à gauche.

Selon l'invention, une électrovanne 16 est intercalée sur l'un des conduits 11 et 12, par exemple sur le conduit 12 comme l'illustre le dessin. L'électrovanne 16 est reliée électriquement, par une liaison filiaire 17, à une commande symbolisée en 18, qui peut être une commande spécifique de démarrage du véhicule, ou un calculateur électronique gérant des fonctions diverses sur le véhicule. Dans tous les cas, la commande 10 envoie vers l'électrovanne 16, par la liaison 17, un signal S maintenant la position ouverte ou fermée de l'électrovanne 16 (dans le cas d'une électrovanne du type fermée ou ouverte au repos), ou bien des impulsions électroniques I commandant le passage de l'électrovanne 16 de la position ouverte à la position fermée, et inversement (dans le cas d'une électrovanne bistable).

Lors de l'utilisation autorisée du véhicule, l'électrovanne 16 est maintenue ouverte, ce qui autorise la libre circulation du fluide hydraulique de la valve 4 vers la chambre de vérin 14, ou de la chambre de vérin 14 vers la valve 4, par le conduit 12. Le piston 15 du vérin d'assistance peut ainsi coulisser librement, le vérin jouant son rôle. Le véhicule peut alors être dirigé normalement.

Lorsque le véhicule est arrêté et doit être mis en sécurité, le retrait de la clé de contact (ou équivalent) provoque, par l'intermédiaire de la commande 18, la fermeture de l'électrovanne 16, donc le blocage du déplacement du fluide hydraulique dans le conduit 12. Ce blocage interdit ainsi toute circulation de fluide hydraulique entre la valve d'assistance 4 et le vérin d'assistance, donc empêche le déplacement du piston 15 et simultanément de la crémaillère 3. Le véhicule ne peut donc plus être dirigé, et il est ainsi rendu inutilisable, pour une personne non autorisée qui tenterait de le conduire.

A cet égard, on notera que la faible fuite "naturelle" de fluide hydraulique au niveau du joint d'étanchéité du piston 15, entre les deux chambres de vérin 13 et 14, crée un couple résistant rendant la conduite du véhicule impossible, l'effort manuel pour tourner le volant étant trop élevé.

A la remise en marche du véhicule par le conducteur autorisé, l'introduction de la clé de contact (ou autre action de mise sous contact en vue du démarrage du véhicule) provoque, par l'intermédiaire de la commande 18, l'ouverture de l'électrovanne 16, qui autorise alors de nouveau la circulation du fluide hydraulique dans le conduit 12, donc le fonctionnement normal du vérin d'assistance avec déplacement du piston 15, donc de la crémaillère 3.

L'on ne s'éloignerait pas du cadre de l'invention, telle que définie dans les revendications annexées :
- en utilisant une vanne hydraulique, notamment une électrovanne 16, de tout type approprié, pour le blocage de la circulation du fluide hydraulique ;
- en prévoyant deux telles électrovannes, placées respectivement sur les deux conduits hydrauliques 11 et 12 d'alimentation du vérin d'assistance ;
- en utilisant tout genre de commande 18 pour la ou les électrovannes ;
- en adaptant le dispositif à une direction à assistance hydraulique de toute configuration ;
- en destinant le même dispositif à des véhicules automobiles pourvus de tous systèmes de mise sous contact.

## Revendications

1. Dispositif antivol pour véhicule automobile à direction assistée hydraulique, la direction comprenant un vérin d'assistance à double effet (2, 13, 14, 15) alimenté en fluide hydraulique par des conduits hydrauliques (11, 12) partant d'une valve d'assistance (4), **caractérisé en ce qu'**il comprend au moins une vanne hydraulique commandée (16), placée sur l'un au moins des conduits hydrauliques (11, 12) d'alimentation du vérin d'assistance (2, 13, 14, 15), la ou chaque vanne hydraulique (16) étant conçue et/ou commandée de façon à interdire la circulation du fluide hydraulique dans le conduit (12) correspondant, lorsque l'utilisation du véhicule doit être empêchée.

2. Dispositif antivol selon la revendication 1, **caractérisé en ce qu'**il comprend deux vannes hydrauliques (16), placées respectivement sur les deux conduits hydrauliques (11, 12) d'alimentation du vérin d'assistance (2, 13, 14, 15).

3. Dispositif antivol selon la revendication 1 ou 2, **caractérisé en ce que** la ou chaque vanne hydraulique (16), placée sur un conduit hydraulique (11, 12) d'alimentation du vérin d'assistance (2, 13, 14, 15), est une électrovanne (16) pilotée à partir d'un calculateur électronique (18) du véhicule concerné, gérant les phases de mise sous contact et de démarrage de ce véhicule.

4. Dispositif antivol selon la revendication 3, **caractérisé en ce que** l'électrovanne (16) est du type "fermée au repos", c'est-à-dire fermée lorsqu'elle n'est pas alimentée électriquement.

5. Dispositif antivol selon la revendication 3, **caractérisé en ce que** l'électrovanne (16) est une électrovanne bistable, nécessitant seulement une impulsion électrique pour sa fermeture et son ouverture.
